# EUROPEAN PATENT SPECIFICATION

(11) **EP 3 816 525 B1**
(45) Date of publication and mention of the grant of the patent: **31.01.2024**
(21) Application number: 18924986.5
(22) Date of filing: 27.06.2018
(51) Int. Cl.: F24F 7/007, F24F 7/08, F24F 11/72, F24F 110/12, F24F 110/22, F24F 110/60, F24F 12/00, F24F 11/00, F24F 11/65, F24F 11/80, F24F 11/81, F24F 110/50, F24F 110/10, F24F 110/20, F24F 110/52

(54) **AIR-CONDITIONING CONTROL SYSTEM**
KLIMAANLAGENSTEUERUNGSSYSTEM
SYSTÈME DE COMMANDE DE CLIMATISATION

(43) Date of publication of application: 05.05.2021
(73) Proprietor: Mitsubishi Electric Corporation, Tokyo 100-8310 (JP)
(72) Inventor: YOSHIDA, Shohei, Tokyo 100-8310 (JP)
(74) Representative: Mewburn Ellis LLP
(86) International application number: PCT/JP2018/024368
(87) International publication number: WO 2020/003405

(56) References cited:
- WO-A1-2015/173910
- JP-A- 2001 304 645
- JP-A- 2002 206 778
- JP-A- 2012 145 247
- JP-A- 2013 092 298
- JP-A- 2014 059 124
- JP-A- 2014 059 124
- JP-A- 2015 102 282
- JP-A- 2015 152 300
- JP-A- 2015 152 300
- US-A1- 2005 279 845

## Description

### Technical Field

The present invention relates to an air-conditioning control system that includes an air-conditioning apparatus and a ventilator.

### Background Art

A related-art air-conditioning control system includes an air-conditioning apparatus and a ventilator connected in series (for example, see Patent Literature 1). The air-conditioning apparatus allows a mixture of outside air (OA) flowing from the ventilator and part of return air (RA) flowing from a controlled space to be intake air. The ventilator discharges a remainder of the return air (RA) flowing from the controlled space as exhaust air (EA).

The air-conditioning control system according to Patent Literature 1 operates the ventilator in a non-heat exchange ventilation mode when an indoor temperature is higher than a cooling set temperature and an outside air temperature, determines whether the air-conditioning apparatus enters an air-sending mode or a cooling mode depending on a difference between the indoor temperature and the cooling set temperature, and operates the air-conditioning apparatus in the determined mode. The air-conditioning control system, for example, operates the air-conditioning apparatus in the air-sending mode when the difference between the indoor temperature and the cooling set temperature is less than or equal to a predetermined value (Tth) and operates the air-conditioning apparatus in the cooling mode when the difference between the indoor temperature and the cooling set temperature is greater than the predetermined value (Tth).

Accordingly, when the indoor temperature is higher than both the cooling set temperature and the outside air temperature and the difference between the indoor temperature and the cooling set temperature is less than or equal to the predetermined value (Tth), the air-conditioning control system operates the ventilator in the non-heat exchange ventilation mode and the air-conditioning apparatus in the air-sending mode, and a mixture of the outside air (OA) flowing from the ventilator and part of the return air (RA) flowing from the controlled space is supplied as supply air (SA) from the air-conditioning apparatus to the controlled space. This enables the air-conditioning control system to exert an effect of outside-air cooling even if an air-conditioning controlled zone covered by the air-conditioning apparatus is away from a place where the ventilator is disposed. Documents US2005/279845 A1, JP2015 152300 A and JP2014 059124 A also disclose relevant air-conditioning control systems.

### Citation List

### Patent Literature

Patent Literature 1: Japanese Patent No. 6006593

### Summary of Disclosure

### Technical Problem

By controlling the air-conditioning apparatus and the ventilator based on information about the temperatures, the air-conditioning control system according to Patent Literature 1 air-conditions the controlled space. However, even when the outside air contains a high concentration of a specified offensive odor substance that generates an offensive odor, for example, the air-conditioning control system suctions the outside air (OA) and supplies the outside air to the controlled space although such outside air should not be basically suctioned. This results in a decrease in indoor air quality (IAQ) and presents a problem of making people inside the space feel unpleasant.

An object of the present invention, accomplished to solve the problem described above, is to provide an air-conditioning control system that can air-condition a controlled space of an indoor room while preventing a decrease in IAQ inside the indoor room.

### Solution to Problem

An air-conditioning control system according to the invention is defined in claim 1. It includes: an air-conditioning apparatus configured to supply an indoor room with supply air and a ventilator configured to replace return air flowing from the indoor room with outside air, the air-conditioning apparatus being connected in series with the ventilator such that the outside air flowing from the ventilator and the return air flowing from the indoor room are supplied to the air-conditioning apparatus,the ventilator comprising:a ventilation fan to suction outside air into the ventilator and to supply the suctioned outside air to the air conditioning apparatus;a discharge fan to suction return air into the ventilator and to discharge the suctioned return air as exhaust air outdoors;and a ventilation total heat exchanger configured to exchange heat between the outside air and the return air suctioned in the ventilator,the air conditioning apparatus comprising:an air conditioning fan to suction outside air and return air into the air-conditioning apparatus and to supply the intake air as supply air the air-conditioning control system comprising:a return air (RA) branch damper configured to adjust a ratio of the return air supplied to the air-conditioning apparatus to the return air supplied to the ventilator;a specified offensive odor substance sensor configured to detect a concentration of a specified offensive odor substance in the outside air; a controller configured to operate the ventilation fan and the discharge fan of the ventilator and control the return air branch damper such that a relationship of the return air = the supply air - the outside air is satisfied when the controller determines that the concentration of the specified offensive odor substance detected by the specified offensive odor substance sensor is less than or equal to a predetermined threshold and to suspend operation of the ventilation fan and the discharge fan of the ventilator and control the RA branch damper such that all the return air is supplied to the air-conditioning apparatus when the controller determines that the concentration of the specified offensive odor substance detected by the specified offensive odor substance sensor is greater than the predetermined threshold,an indoor temperature sensor configured to detect a temperature of the indoor room;an outside air temperature sensor configured to detect an outside air temperature; andan outside air humidity sensor configured to detect an outside air humidity;wherein the controller performs cooling when determining that the temperature of the indoor room detected by the indoor temperature sensor is higher than a predetermined upper-limit dry-bulb temperature,wherein, when cooling needs to be performed and when determining that the outside air temperature detected by the outside air temperature sensor is higher than or equal to the predetermined upper-limit dry-bulb temperature, the controller operates the ventilator in a heat exchange mode in which heat is exchanged in the ventilation total heat exchanger of the ventilator and operates the air-conditioning apparatus in a heat exchange mode in which heat is exchanged in the air-conditioning apparatus.

### Advantageous Effects of Invention

The air-conditioning control system according to the invention suspends operation of the ventilator and controls the RA branch damper such that all the return air is supplied to the air-conditioning apparatus when the concentration of the specified offensive odor substance detected by the specified offensive odor substance sensor is greater than the predetermined threshold. As a result, the air-conditioning control system can air-condition a controlled space of the indoor room while preventing a decrease in IAQ inside the indoor room.

### Brief Description of Drawings

[Fig. 1] Fig. 1 illustrates a configuration of an air-conditioning control system
[Fig. 2] Fig. 2 illustrates a control flow of a process executed by the air-conditioning control system of Fig. 1.
[Fig. 3] Fig. 3 illustrates a configuration of an air-conditioning control system
[Fig. 4] Fig. 4 is a graph with which the air-conditioning control system according to Fig. 3 determines whether or not to perform outside-air cooling.
[Fig. 5] Fig. 5 illustrates a control flow of a process executed by the air-conditioning control system of Fig. 3.
[Fig. 6] Fig. 6 illustrates a configuration of an air-conditioning control system according to an embodiment of the present invention.
[Fig. 7] Fig. 7 is a first view illustrating a control flow of a process executed by the air-conditioning control system according to the embodiment of the present invention shown in Fig. 6.
[Fig. 8] Fig. 8 is a second view illustrating a control flow of another process executed by the air-conditioning control system according to the embodiment of the present invention shown in Fig. 6.

### Description of Embodiments

In the following drawings, a relationship between sizes of structural components may differ from a relationship between actual sizes thereof.

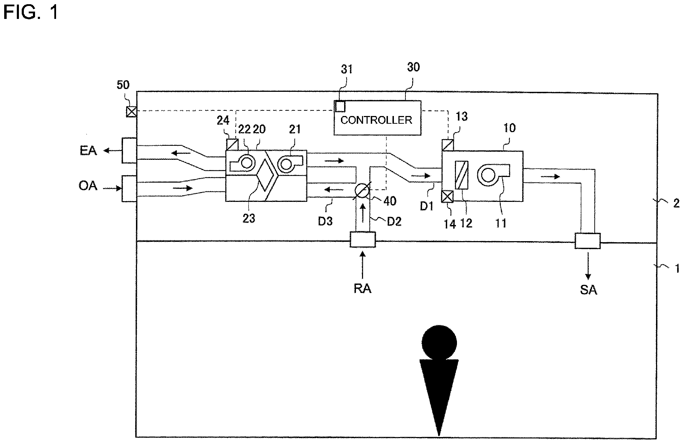

Fig. 1 illustrates a configuration of an air-conditioning control system.

The air-conditioning control system according to Fig. 1 includes an air-conditioning apparatus 10, a ventilator 20, a controller 30, a return air (RA) branch damper 40, and a specified offensive odor substance sensor 50. The air-conditioning apparatus 10, the ventilator 20, the controller 30, and the RA branch damper 40 are disposed in a ceiling space 2.

In the air-conditioning control system according to Fig. 1, the air-conditioning apparatus 10 and the ventilator 20 are connected in series. In other words, the air-conditioning apparatus and the ventilator are connected by ducts D1 to D3 such that the air-conditioning apparatus 10 suctions a mixture of outside air (OA) flowing from the ventilator 20 and part of return air (RA) flowing from a controlled space 1 (hereinafter also referred to as an indoor room) and the ventilator 20 discharges a remainder of the return air (RA) flowing from the controlled space 1 as exhaust air (EA).

The air-conditioning apparatus 10 includes an air-conditioning fan 11, an air-conditioning heat exchanger 12, and an air-conditioning control board 13.

The air-conditioning fan 11 suctions outside air (OA) and return air (RA) into the air-conditioning apparatus 10 and supplies the intake air as supply air (SA) to the controlled space 1. The air-conditioning heat exchanger 12 allows the air suctioned into the air-conditioning apparatus 10 to exchange heat with refrigerant and adjusts temperature and humidity levels of the supply air (SA). In accordance with instructions from the controller 30, the air-conditioning control board 13 controls rotation speed of the air-conditioning fan 11 and controls the air-conditioning heat exchanger 12 to turn on or turn off heat exchange.

The ventilator 20 includes a ventilation SA fan 21, a discharge EA fan 22, a ventilation total heat exchanger 23, a ventilation control board 24, and an indoor temperature sensor 25.

The ventilation SA fan 21 suctions outside air (OA) into the ventilator 20 and, after energy recovery ventilation, supplies the intake air to the duct D1. The discharge EA fan 22 allows return air (RA) to be suctioned into the ventilator 20 and, after energy recovery ventilation, discharges the intake air as exhaust air (EA) outdoors. The ventilation total heat exchanger 23 is configured to exchange heat between the outside air (OA) and the return air (RA) suctioned in the ventilator 20.

The ventilation control board 24, in accordance with instructions from the controller 30, controls rotation speed of the ventilation SA fan 21 and rotation speed of the discharge EA fan 22.

The indoor temperature sensor 25 detects a temperature of return air (RA) suctions from the controlled space 1 into the ventilator 20, i.e., an indoor temperature (Tre). The indoor temperature sensor 25 may be disposed in the controlled space 1 rather than in the ventilator 20.

The specified offensive odor substance sensor 50 is disposed outdoors to detect a concentration of a specified offensive odor substance that causes an offensive odor. In Embodiment 1, the specified offensive odor substance is any of ammonia, a volatile organic compound (a VOC), and particulate matter 2.5 (PM 2.5). The specified offensive odor substance sensor 50 may be disposed in the ventilator 20 rather than outdoors.

The controller 30 is implemented by hardware that includes a processor and a storage unit, as well as programs designed to fulfill various functions in cooperation with these parts of the hardware. The controller 30 has a function of controlling operation of both the air-conditioning apparatus 10 and the ventilator 20 via the air-conditioning control board 13 and the ventilation control board 24, respectively, whereby the air-conditioning apparatus and the ventilator are controlled in an interlocked manner. The controller 30 acquires information on the indoor temperature detected by the indoor temperature sensor 25 and the concentration of the specified offensive odor substance detected by the specified offensive odor substance sensor 50, to thereby control the RA branch damper 40 based on the acquired information.

The controller 30 includes a memory 31, as described later, configured to store thresholds of concentrations of ammonia, formaldehyde or another VOC, and PM 2.5, as well as indoor target temperature and humidity levels. The memory 31 saves data on the indoor temperature detected by the indoor temperature sensor 25 and the concentration of the specified offensive odor substance detected by the specified offensive odor substance sensor 50. The memory 31 may be disposed outside the controller 30. The thresholds of concentrations of PM 2.5 and the indoor target temperature and humidity levels are designed to be freely changed by a user later. The controller 30 uses operation modes including a ventilation mode and a non-ventilation mode described later.

The RA branch damper 40 is disposed at an intersection of the duct D2 and the duct D3 to adjust a ratio of the return air RA supplied to the air-conditioning apparatus 10 to the return air (RA) supplied to the ventilator 20.

Based on the indoor temperature detected by the indoor temperature sensor 25, the air-conditioning apparatus 10 air-conditions the return air (RA) with the air-conditioning heat exchanger 12 to adjust a temperature of the controlled space 1 to the indoor target temperature level and supplies the supply air (SA) to the controlled space 1.

The ventilator 20 allows the ventilation SA fan 21 to operate to suction outside air (OA) and after allowing the ventilation total heat exchanger 23 to exchange heat between the outside air and the exhaust air (EA), supplies the outside air to the air-conditioning apparatus 10. The ventilator 20 allows the discharge EA fan 22 to operate to suction the return air (RA) and after allowing the ventilation total heat exchanger 23 to perform heat exchange between the return air and the outside air (OA), discharges the return air as the exhaust air (EA) outdoors.

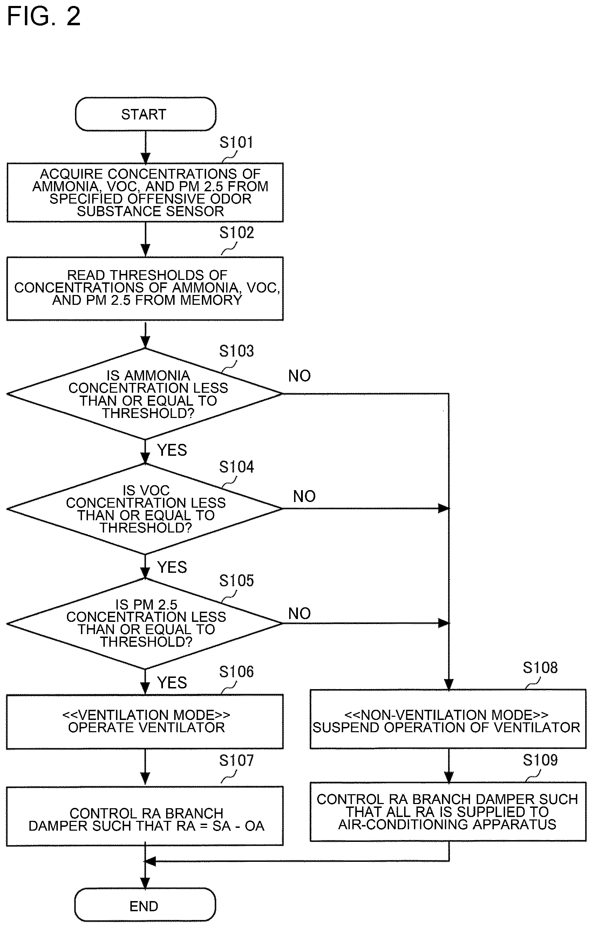

Fig. 2 illustrates a control flow of a process executed by the air-conditioning control system according to Fig. 1.

With reference to Fig. 2, operation of the air-conditioning control system according to Fig. 1 will now be described.

### (Step S101)

The controller 30 acquires information on any of the concentrations of ammonia, the VOC, and PM 2.5 from the specified offensive odor substance sensor 50.

### (Step S102)

The controller 30 reads the thresholds of concentrations of ammonia, the VOC, and PM 2.5 from the memory 31.

### (Step S103)

The controller 30 determines whether or not the concentration of ammonia detected by the specified offensive odor substance sensor 50 is less than or equal to the threshold (e.g., 1 ppm). When the controller 30 determines that the ammonia concentration is less than or equal to the threshold, the process proceeds to step S104. Meanwhile, when the controller 30 determines that the ammonia concentration is not less than or equal to the threshold, the process proceeds to step S108.

### (Step S104)

The controller 30 determines whether or not the concentration of the VOC detected by the specified offensive odor substance sensor 50 is less than or equal to the threshold (e.g., 0.08 ppm). When the controller 30 determines that the VOC concentration is less than or equal to the threshold, the process proceeds to step S105. Meanwhile, when the controller 30 determines that the VOC concentration is not less than or equal to the threshold, the process proceeds to step S108.

### (Step S105)

The controller 30 determines whether or not the concentration of PM 2.5 detected by the specified offensive odor substance sensor 50 is less than or equal to the threshold (e.g., 70 µg/m³). When the controller 30 determines that the PM 2.5 concentration is less than or equal to the threshold, the process proceeds to step S106. Meanwhile, when the controller 30 determines that the PM 2.5 concentration is not less than or equal to the threshold, the process proceeds to step S108.

### (Step S106)

The controller 30 switches the operation mode to the ventilation mode and operates the ventilator 20. In other words, the controller allows the ventilation SA fan 21 and the discharge EA fan 22 of the ventilator 20 to be in operation through the ventilation control board 24.

### (Step S107)

The controller 30 controls the RA branch damper 40 such that a relationship of the return air (RA) = the supply air (SA) - the outside air (OA) is satisfied. In other words, a quantity of the supply air (SA) is set manually by the user or is determined automatically based on the indoor temperature and a set temperature, and the controller 30 controls the RA branch damper 40 such that the return air (RA) has a quantity that is determined based on the quantity of the supply air (SA). In a case of automatically determining the quantity of the supply air (SA), the controller 30, for example, sets the quantity of the supply air (SA) to a high airflow level when a difference between the indoor temperature and the set temperature is greater than or equal to a first threshold, sets the quantity of the supply air (SA) to a medium airflow level when the difference between the indoor temperature and the set temperature is less than the first threshold and greater than or equal to a second threshold (< the first threshold), and sets the quantity of the supply air (SA) to a low airflow level when the difference between the indoor temperature and the set temperature is less than the second threshold.

### (Step S108)

The controller 30 switches the operation mode to the non-ventilation mode and suspends operation of the ventilator 20. In other words, the controller allows the ventilation SA fan 21 and the discharge EA fan 22 of the ventilator 20 to be in suspension through the ventilation control board 24.

### (Step S109)

The controller 30 controls the RA branch damper 40 such that all the return air (RA) is supplied to the air-conditioning apparatus 10.

As described above, the air-conditioning control system according to Fig. 1 determines whether or not to suction outside air (OA) in response to information on the concentration of the specified offensive odor substance. When the detected concentration of the specified offensive odor substance exceeds the threshold, the controller suspends the operation of the ventilator 20 to stop suctioning the outside air (OA) and controls the RA branch damper 40 such that all the return air (RA) is supplied to the air-conditioning apparatus 10.

In this way, when the outside air is in bad condition, the controller stops suctioning the outside air (OA) and supplies the return air (RA) instead of the outside air to the air-conditioning apparatus 10. This prevents the concentration of the specified offensive odor substance in an indoor room from rising, thus preventing a decrease in IAQ inside the indoor room and preventing a decrease in comfort of people inside the indoor room.

In the air-conditioning control system according to Fig. 1, the air-conditioning apparatus 10 and the ventilator 20 are connected in series. In a related-art system having such a configuration, stopping suctioning outside air (OA) affects the quantity of supply air (SP) supplied from an air-conditioning apparatus 10 to a controlled space 1. Meanwhile, the air-conditioning control system according to Fig. 1 stops suctioning outside air (OA) and simultaneously controls the RA branch damper 40 such that all the return air (RA) is supplied to the air-conditioning apparatus 10. This prevents the quantity of the supply air (SA) supplied from the air-conditioning apparatus 10 to the controlled space 1 from changing. In other words, the air-conditioning control system prevents a decrease in IAQ inside the indoor room without changing the quantity of the supply air (SA) supplied from the air-conditioning apparatus 10 to the controlled space 1.

In the air-conditioning control system according to Fig. 1, the air-conditioning apparatus 10 and the ventilator 20 are connected in series by the ducts D1 to D3. This allows a reduction in number of air outlets and in number of ducts and contributes to reduced costs incurred in installation.

In the air-conditioning control system according to Fig. 1, the controller executes all the steps S103 to S105. However, the process is not limited to this example. The controller may execute only some of the steps (e.g., only the steps S104 and S105).

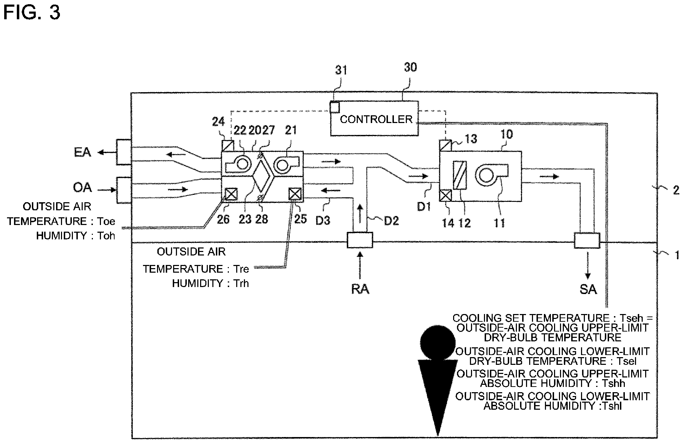

The air conditioning control system of Fig. 3 will now be described. Descriptions of elements that are shared with Fig. 1 are omitted, and parts identical with or equivalent to those in Fig. 1 are denoted by the same reference signs.

Fig. 3 illustrates a configuration of an air-conditioning control system.

The air-conditioning control system according to Fig. 3 includes an air-conditioning apparatus 10, a ventilator 20, and a controller 30 that are disposed in a ceiling space 2.

In the air-conditioning control system according to Fig. 3, the air-conditioning apparatus 10 and the ventilator 20 are connected in series. In other words, the air-conditioning apparatus and the ventilator are connected by ducts D1 to D3 such that the air-conditioning apparatus 10 suctions a mixture of outside air (OA) flowing from the ventilator 20 and part of return air (RA) flowing from a controlled space 1 and the ventilator 20 discharges a remainder of the return air (RA) flowing from the controlled space 1 as exhaust air (EA).

The air-conditioning apparatus 10 includes an air-conditioning fan 11, an air-conditioning heat exchanger 12, and an air-conditioning control board 13.

The ventilator 20 includes a ventilation SA fan 21, a discharge EA fan 22, a ventilation total heat exchanger 23, a ventilation control board 24, an indoor temperature sensor 25, an outside air temperature humidity sensor 26, a first bypass 27, and a second bypass 28.

The outside air temperature humidity sensor 26 detects temperature and humidity levels of the outside air (OA) suctioned into the ventilator 20, i.e., an outside air temperature (Toe) and an outside air humidity (Toh). Instead of the outside air temperature humidity sensor 26, an outside air temperature sensor used to detect the outside air temperature (Toe) and an outside air humidity sensor used to detect the outside air humidity (Toh) may be separately disposed.

The first bypass 27 is configured to discharge the return air (RA) suctioned into the ventilator 20 as exhaust air (EA) outdoors without permitting the return air to pass through the ventilation total heat exchanger 23. The second bypass 28 is configured to supply the outside air (OA) suctioned into the ventilator 20 to the duct D1 without permitting the outside air to pass through the ventilation total heat exchanger 23. The first and the second bypasses 27 and 28 each include, for example, a motor and a plate and each have a mechanism to operate the plate by the motor. When the bypass is turned off, the bypass switches to an air duct that allows the air to pass through the ventilation total heat exchanger 23. When the bypass is turned on, the bypass switches to an air duct that does not allow the air to pass through the ventilation total heat exchanger 23.

The ventilation control board 24, in accordance with instructions from the controller 30, controls rotation speed of the ventilation SA fan 21, rotation speed of the discharge EA fan 22, turning on or off of the first bypass 27, and turning on or off of the second bypass 28. When the first bypass 27 is turned on, the outside air OA suctioned into the ventilator 20 is sent to the duct D1 without passing through the ventilation total heat exchanger 23. Similarly, when the second bypass 28 is turned on, the return air (RA) suctioned into the ventilator 20 is discharged outdoors without passing through the ventilation total heat exchanger 23.

The controller 30 uses operation modes including an outside-air cooling mode, a semi-outside-air cooling mode, and a non-outside-air cooling mode described later.

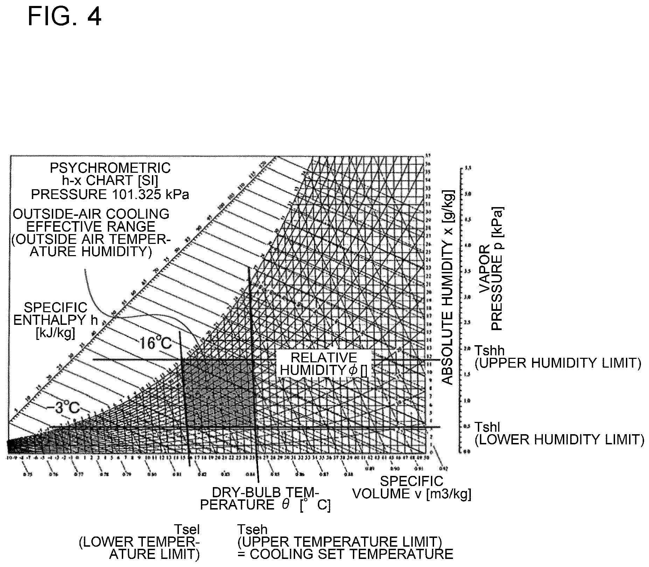

Fig. 4 is a graph with which the air-conditioning control system according to Fig. 3 determines whether or not to perform outside-air cooling.

A memory 31 stores a set temperature = an upper-limit dry-bulb temperature (Tseh), a lower-limit dry-bulb temperature (Tsel), an upper-limit absolute humidity (Tshh), and a lower-limit absolute humidity (Tshl). As shown in Fig. 4, the upper-limit dry-bulb temperature (Tseh), the lower-limit dry-bulb temperature (Tsel), the upper-limit absolute humidity (Tshh), and the lower-limit absolute humidity (Tshl) are parameters with which the air-conditioning control system determines whether or not to perform outside-air cooling and form an outside-air cooling effective range. The outside-air cooling represents cooling performed by supplying the outside air OA as-is to the controlled space 1 without permitting the outside air to exchange heat in the air-conditioning apparatus 10 and the ventilator 20.

The set temperature (Tse), the upper-limit dry-bulb temperature (Tseh), the lower-limit dry-bulb temperature (Tsel), the upper-limit absolute humidity (Tshh), and the lower-limit absolute humidity (Tshl) are designed to be freely changed later by a user.

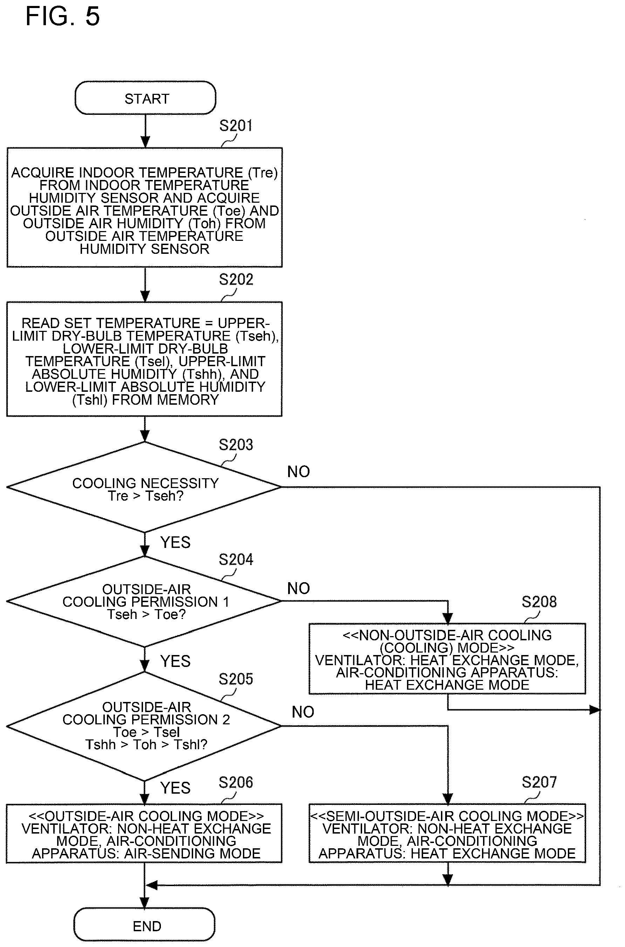

Fig. 5 is a view illustrating a control flow of a process executed by the air-conditioning control system according to Fig. 3.

With reference to Fig. 5, operation of the air-conditioning control system according to Fig. 3 will now be described.

### (Step S201)

The controller 30 acquires information on an indoor temperature (Tre) from the indoor temperature sensor 25 and acquires information on the outside air temperature (Toe) and the outside air humidity (Toh) from the outside air temperature humidity sensor 26.

### (Step S202)

The controller 30 reads the upper-limit dry-bulb temperature (Tseh), the lower-limit dry-bulb temperature (Tsel), the upper-limit absolute humidity (Tshh), and the lower-limit absolute humidity (Tshl) from the memory 31.

### (Step S203)

The controller 30 determines whether or not the indoor temperature (Tre) detected by the indoor temperature sensor 25 is higher than the upper-limit dry-bulb temperature (Tseh). When the controller 30 determines that the indoor temperature (Tre) is higher than the upper-limit dry-bulb temperature (Tseh), the process proceeds to step S204. Meanwhile, when the controller 30 determines that the indoor temperature (Tre) is not higher than the upper-limit dry-bulb temperature (Tseh), the process ends.

### (Step S204)

The controller 30 determines whether or not the outside air temperature (Toe) detected by the outside air temperature humidity sensor 26 is lower than the upper-limit dry-bulb temperature (Tseh). When the controller 30 determines that the outside air temperature (Toe) is lower than the upper-limit dry-bulb temperature (Tseh), the process proceeds to step S205. Meanwhile, when the controller 30 determines that the outside air temperature (Toe) is not lower than the upper-limit dry-bulb temperature (Tseh), the process proceeds to step S208.

### (Step S205)

The controller 30 determines whether or not an outside-air cooling condition is satisfied. The outside-air cooling condition described herein specifies that the outside air temperature (Toe) is higher than the lower-limit dry-bulb temperature (Tsel) and that the outside air humidity (Toh) is lower than the upper-limit absolute humidity (Tshh) and higher than the lower-limit absolute humidity (Tshl). When the controller 30 determines that the outside-air cooling condition is satisfied, the process proceeds to step S206. Meanwhile, when the controller 30 determines that the outside-air cooling condition is not satisfied, the process proceeds to step S207.

### (Step S206)

The controller 30 switches the operation mode to the outside-air cooling mode. In other words, the controller turns on the first and the second bypasses 27 and 28 through the ventilation control board 24 to operate the ventilator 20 in a non-heat exchange mode in which heat is not exchanged by the ventilation total heat exchanger 23. The controller also turns off the air-conditioning heat exchanger 12 through the air-conditioning control board 13 to operate the air-conditioning apparatus 10 in an air-sending mode in which heat is not exchanged by the air-conditioning heat exchanger 12.

### (Step S207)

The controller 30 switches the operation mode to the semi-outside-air cooling mode. In other words, the controller turns on the first and the second bypasses 27 and 28 through the ventilation control board 24 to operate the ventilator 20 in the non-heat exchange mode in which heat is not exchanged by the ventilation total heat exchanger 23. The controller also turns on the air-conditioning heat exchanger 12 through the air-conditioning control board 13 to operate the air-conditioning apparatus 10 in a heat exchange mode in which heat is exchanged by the air-conditioning heat exchanger 12.

### (Step S208)

The controller 30 switches the operation mode to the non-outside-air cooling (a cooling) mode. In other words, the controller turns on the first and the second bypasses 27 and 28 through the ventilation control board 24 to operate the ventilator 20 in the heat exchange mode in which heat is exchanged by the ventilation total heat exchanger 23. The controller also turns off the air-conditioning heat exchanger 12 through the air-conditioning control board 13 to operate the air-conditioning apparatus 10 in the heat exchange mode in which heat is exchanged by the air-conditioning heat exchanger 12.

As described above, when cooling needs to be performed, the air-conditioning control system according to Fig. 3 determines whether or not outside-air cooling is permitted in response to information on the outside air temperature (Toe) and the outside air humidity (Toh). Specifically, when the outside air temperature (Toe) is higher than the set temperature (Tse), outside-air cooling is not permitted and thus the controller allows the outside air OA to exchange heat with the return air RA through the ventilation total heat exchanger 23 of the ventilator 20 and then allows the outside air to exchange heat with refrigerant through the air-conditioning heat exchanger 12 of the air-conditioning apparatus 10 to cool the outside air.

When the outside air temperature (Toe) is lower than the upper-limit dry-bulb temperature (Tseh) and the outside-air cooling condition is satisfied, the air-conditioning control system operates in the outside-air cooling mode. In other words, the air-conditioning control system performs energy-saving operation since the ventilator 20 operates in the non-heat exchange mode and the air-conditioning apparatus 10 operates in the air-sending mode in which the outside air OA is not allowed to exchange heat but is supplied as-is to the controlled space 1. Meanwhile, when the outside-air cooling condition is not satisfied because the outside air temperature (Toe) is lower than the lower-limit dry-bulb temperature (Tsel) or the outside air humidity (Toh) is not an appropriate value while the outside air temperature (Toe) is lower than the upper-limit dry-bulb temperature (Tseh), the air-conditioning control system operates in the semi-outside-air cooling mode. In other words, the ventilator 20 operates in the non-heat exchange mode and the air-conditioning apparatus 10 operates in the heat exchange mode in which the outside air OA is adjusted in temperature by heat exchange and is then supplied to the controlled space 1.

In this way, the air-conditioning control system according to Fig. 3 determines whether or not outside-air cooling is permitted in response to information on the outside air temperature (Toe) and the outside air humidity (Toh). Thus, in contrast to a related-art system that determines whether or not outside-air cooling is permitted in response to information only on the outside air temperature, the air-conditioning control system of this embodiment does not perform outside-air cooling when the outside air temperature is too low or the outside air humidity is not an appropriate value. This enables the air-conditioning control system to perform outside-air cooling with high accuracy and prevent a decrease in comfort of people inside the indoor room.

An embodiment of the present invention will now be described. Descriptions on components that are similar to those in Figs. 1 and 3 are omitted, and parts identical or equivalent to those in Figs. 1 and 3 are denoted by the same reference signs.

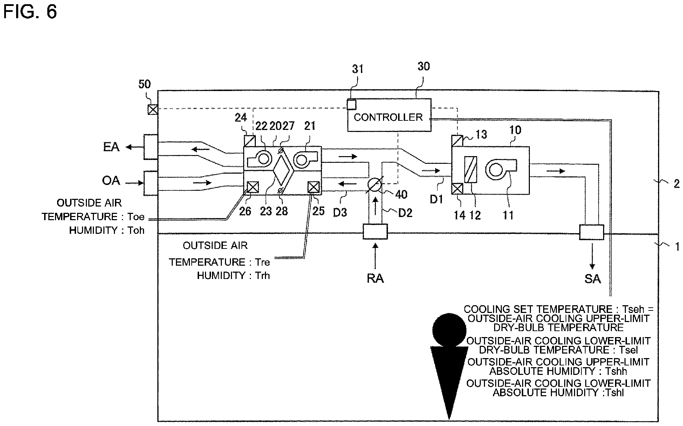

Fig. 6 illustrates a configuration of an air-conditioning control system according to an embodiment of the present invention.

The air-conditioning control system includes an air-conditioning apparatus 10, a ventilator 20, a controller 30, an RA branch damper 40, and a specified offensive odor substance sensor 50. The air-conditioning apparatus 10, the ventilator 20, the controller 30, and the RA branch damper 40 are disposed in a ceiling space 2.

In the air-conditioning control system according to this embodiment, the air-conditioning apparatus 10 and the ventilator 20 are connected in series. In other words, the air-conditioning apparatus and the ventilator are connected by ducts D1 to D3 such that the air-conditioning apparatus 10 suctions a mixture of outside air (OA) flowing from the ventilator 20 and part of return air (RA) flowing from a controlled space 1 and the ventilator 20 discharges a remainder of the return air (RA) flowing from the controlled space 1 as exhaust air (EA).

The air-conditioning apparatus 10 includes an air-conditioning fan 11, an air-conditioning heat exchanger 12, and an air-conditioning control board 13.

The ventilator 20 includes a ventilation SA fan 21, a discharge EA fan 22, a ventilation total heat exchanger 23, a ventilation control board 24, an indoor temperature sensor 25, an outside air temperature humidity sensor 26, a first bypass 27, and a second bypass 28.

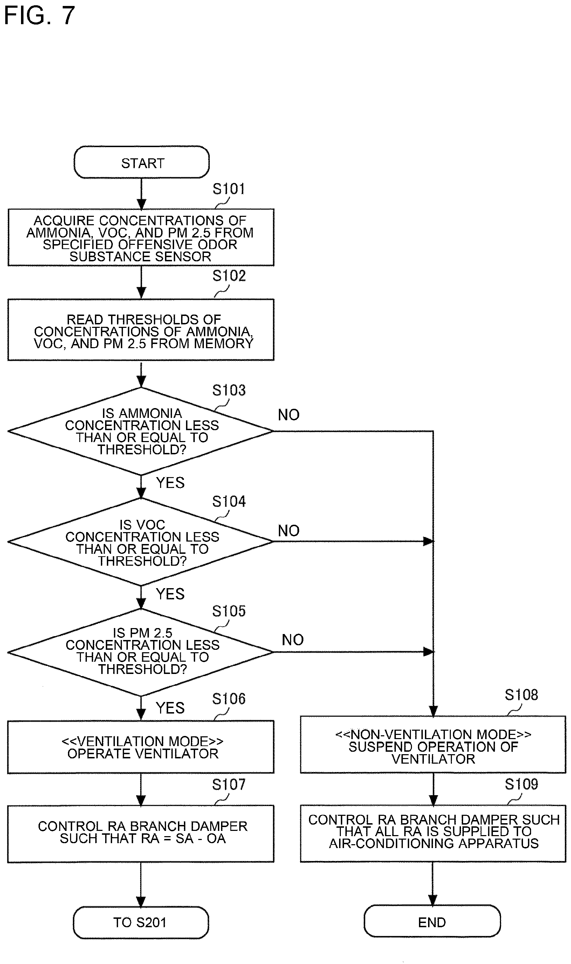

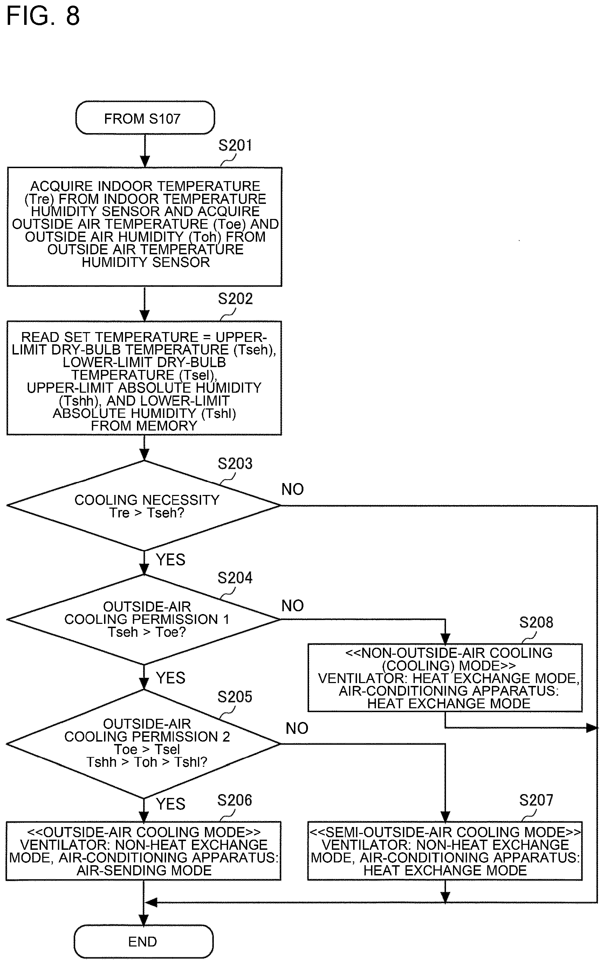

Fig. 7 is a first view illustrating a control flow of a process executed by the air-conditioning control system according to the embodiment of Fig. 6. Fig. 8 is a second view illustrating a control flow of another process executed by the air-conditioning control system according to the embodiment of Fig. 6,

With reference to Figs. 7 and 8, operation of the air-conditioning control system according the embodiment of Fig. 6 will now be described.

Steps S101 to S109 shown in Fig. 7 are similar to the steps S101 to S1 shown in Fig. 2, and steps S201 to S207 shown in Fig. 8 are similar to the steps S201 to S207 shown in Fig. 5. Thus, descriptions of the steps are omitted.

In the embodiment of Fig. 6, after an action of the step S107, an action of the step S201 shown in Fig. 8 is executed. In other words, the air-conditioning control system according to the embodiment of Fig. 6 executes a control flow of the process described in Fig. 2 and then executes a control flow of the process described in Fig. 5

As described above, the air-conditioning control system according to the embodiment of Fig. 6 determines whether or not to suction outside air OA in response to information on the concentration of the specified offensive odor substance and when cooling needs to be performed, determines whether or not outside-air cooling is permitted in response to information on the outside air temperature (Toe) and the outside air humidity (Toh).

In this way, the air-conditioning control system executes both the control flow of the process described in Fig. 2 and the control flow of the process described in Fig. 5 and is thereby able to determine whether or not to suction outside air OA more carefully. Hence, the air-conditioning control system has an enhanced capability to prevent a decrease in IAQ inside the indoor room and prevent a decrease in comfort of people inside the indoor room.

### Reference Signs List

1 controlled space 2 ceiling space 10 air-conditioning apparatus 11 air-conditioning fan 12 air-conditioning heat exchanger 13 air-conditioning control board 20 ventilator 21 ventilation SA fan 22 discharge EA fan 23 ventilation total heat exchanger 24 ventilation control board 25 indoor temperature sensor 26 outside air temperature humidity sensor27 first bypass 28 second bypass 30 controller 31 memory 40 RA branch damper 50 specified offensive odor substance sensor D1 to D3 duct

## Claims

1. An air-conditioning control system that includes:
an air-conditioning apparatus (10) configured to supply an indoor room with supply air (SA) and a ventilator (20) configured to replace return air (RA) flowing from the indoor room with outside air (OA), the air-conditioning apparatus (10) being connected in series with the ventilator (20) such that the outside air (OA) flowing from the ventilator (20) and the return air (RA) flowing from the indoor room are supplied to the air-conditioning apparatus (10),
the ventilator comprising:
a ventilation fan (21) to suction outside air (OA) into the ventilator (20) and to supply the suctioned outside air (OA) to the air conditioning apparatus (10);
a discharge fan (22) to suction return air (RA) into the ventilator (20) and to discharge the suctioned return air (RA) as exhaust air (EA) outdoors;
and a ventilation total heat exchanger (23) configured to exchange heat between the outside air (OA) and the return air (RA) suctioned in the ventilator (20),
the air conditioning apparatus comprising:
an air conditioning fan (11) to suction outside air (OA) and return air (RA) into the air-conditioning apparatus (10) and to supply the intake air as supply air (SA)
the air-conditioning control system comprising:
a return air (RA) branch damper (40) configured to adjust a ratio of the return air supplied to the air-conditioning apparatus (10) to the return air supplied to the ventilator (20);
a specified offensive odor substance sensor (50) configured to detect a concentration of a specified offensive odor substance in the outside air (OA);
a controller (30) configured to operate the ventilation fan (21) and the discharge fan (22) of the ventilator (20) and control the RA branch damper (40) such that a relationship of the return air = the supply air - the outside air is satisfied when the controller (30) determines that the concentration of the specified offensive odor substance detected by the specified offensive odor substance sensor (50) is less than or equal to a predetermined threshold and to suspend operation of the ventilation fan (21) and the discharge fan (22) of the ventilator (20) and control the RA branch damper (40) such that all the return air is supplied to the air-conditioning apparatus (10) when the controller (30) determines that the concentration of the specified offensive odor substance detected by the specified offensive odor substance sensor (50) is greater than the predetermined threshold,
an indoor temperature sensor (25) configured to detect a temperature of the indoor room;
an outside air temperature sensor configured to detect an outside air temperature; and
an outside air humidity sensor configured to detect an outside air humidity;
wherein the controller (30) performs cooling when determining that the temperature of the indoor room detected by the indoor temperature sensor (25) is higher than a predetermined upper-limit dry-bulb temperature,
wherein, when cooling needs to be performed and when determining that the outside air temperature detected by the outside air temperature sensor is higher than or equal to the predetermined upper-limit dry-bulb temperature, the controller (30) operates the ventilator (20) in a heat exchange mode in which heat is exchanged in the ventilation total heat exchanger (23) of the ventilator (20) and operates the air-conditioning apparatus (10) in a heat exchange mode in which heat is exchanged in the air-conditioning apparatus (10).

2. The air-conditioning control system of claim 1,
wherein, when cooling needs to be performed, and when determining that the outside air temperature detected by the outside air temperature sensor is lower than the predetermined upper-limit dry-bulb temperature and that an outside-air cooling condition is satisfied, the controller (30) operates the ventilator (20) in a non-heat exchange mode in which heat is not exchanged in the ventilator (20) and operates the air-conditioning apparatus (10) in an air-sending mode in which heat is not exchanged in the air-conditioning apparatus (10), the outside-air cooling condition specifying that the outside air temperature detected by the outside air temperature sensor is lower than the predetermined upper-limit dry-bulb temperature and higher than a predetermined lower-limit dry-bulb temperature and that the outside air humidity detected by the outside air humidity sensor is lower than a predetermined upper-limit absolute humidity and higher than a predetermined lower-limit absolute humidity.

3. The air-conditioning control system of claim 2,
wherein, when cooling needs to be performed, and when determining that the outside air temperature detected by the outside air temperature sensor is lower than the predetermined upper-limit dry-bulb temperature and that the outside-air cooling condition is not satisfied, the controller (30) operates the ventilator (20) in the non-heat exchange mode in which heat is not exchanged in the ventilator (20) and operates the air-conditioning apparatus (10) in the heat exchange mode in which heat is exchanged in the air-conditioning apparatus (10).

## Patentansprüche

1. Klimaanlagen-Steuersystem, das Folgendes umfasst:
eine Klimaanlagenvorrichtung (10), die ausgelegt ist, um einen Innenraum mit Zufuhrluft (SA) zu versorgen, und einen Lüfter (20), der ausgelegt ist, um Rückluft (RA), die aus dem Innenraum strömt, mit Außenluft (OA) zu ersetzen, wobei die Klimaanlagenvorrichtung (10) derart mit dem Lüfter (20) in Reihe geschaltet ist, dass die Außenluft (OA), die aus dem Lüfter (20) strömt, und die Rückluft (RA), die aus dem Innenraum strömt, der Klimaanlagenvorrichtung (10) zugeführt werden,
wobei der Lüfter Folgendes umfasst:
ein Lüftergebläse (21) zum Ansaugen von Außenluft (OA) in den Lüfter (20) und zum Zuführen der angesaugten Außenluft (OA) an die Klimaanlagenvorrichtung (10);
ein Abführgebläse (22) zum Ansaugen von Rückluft (RA) in den Lüfter (20) und zum Abführen der angesaugten Rückluft (RA) als Abluft (EA) an die Außenluft; und
einen Belüftungsgesamtwärmetauscher (23), der ausgelegt ist, um Wärme zwischen der Außenluft (OA) und der in den Lüfter (20) angesaugten Rückluft (RA) auszutauschen,
wobei die Klimaanlagenvorrichtung Folgendes umfasst:
ein Klimaanlagengebläse (11) zum Ansaugen von Außenluft (OA) und Rückluft (RA) in die Klimaanlagenvorrichtung (10) und zum Zuführen der Ansaugluft als Zufuhrluft (SA),
wobei das Klimaanlagen-Steuersystem Folgendes umfasst:
einen Rückluft- (RA) Verzweigungsdämpfer (40), der ausgelegt ist, um ein Verhältnis der Rückluft, die der Klimaanlagenvorrichtung (10) zugeführt wird, zu der Rückluft, die dem Lüfter (20) zugeführt wird, einzustellen;
einen Sensor (50) für angegebene Substanzen mit schlechtem Geruch, der ausgelegt ist, um eine Konzentration einer angegebenen Substanz mit schlechtem Geruch in der Außenluft (OA) zu detektieren;
eine Steuerung (30), die ausgelegt ist, um das Lüftergebläse (21) und das Abführgebläse (22) des Lüfters (20) zu betreiben und um den RA-Verzweigungsdämpfer (40) derart zu steuern, dass eine Beziehung zwischen der Rückluft = die Zufuhrluft - die Außenluft erfüllt wird, wenn die Steuerung (30) bestimmt, dass die Konzentration der angegebenen Substanz mit schlechtem Geruch, die durch den Sensor (50) für angegebene Substanzen mit schlechtem Geruch detektiert wurde, kleiner oder gleich einem vorbestimmten Schwellenwert ist, und um den Betrieb des Lüftergebläses (21) und des Abführgebläses (22) des Lüfters (20) anzuhalten und um den RA-Verzweigungsdämpfer (40) derart zu steuern, dass die gesamte Rückluft der Klimaanlagenvorrichtung (10) zugeführt wird, wenn die Steuerung (30) bestimmt, dass die Konzentration der angegebenen Substanz mit schlechtem Geruch, die durch den Sensor (50) für eine angegebene Substanz mit schlechtem Geruch detektiert wurde, höher ist als der vorbestimmte Schwellenwert,
einen Innenraum-Temperatursensor (25), der ausgelegt ist, um eine Temperatur des Innenraums zu detektieren;
einen Außenluft-Temperatursensor, der ausgelegt ist, um eine Außenlufttemperatur zu detektieren; und
einen Außenluftfeuchtigkeitssensor, der ausgelegt ist, um eine Außenluftfeuchtigkeit zu detektieren;
wobei die Steuerung (30) ein Kühlen durchführt, wenn bestimmt wird, dass die Temperatur des Innenraums, die durch den Innenraum-Temperatursensor (25) detektiert wurde, höher ist als eine vorbestimmte Trockenkugeltemperatur-Obergrenze,
wobei, wenn ein Kühlen durchgeführt werden muss, und wenn bestimmt wird, dass die Außenlufttemperatur, die durch den Außenluft-Temperatursensor detektiert wurde, höher oder gleich hoch ist wie die vorbestimmte Trockenkugeltemperatur-Obergrenze, die Steuerung (30) den Lüfter (20) in einem Wärmetauschermodus betreibt, in dem Wärme in dem Belüftungsgesamtwärmetauscher (23) des Lüfters (20) ausgetauscht wird, und die Klimaanlagenvorrichtung (10) in einem Wärmetauschermodus betreibt, in dem Wärme in der Klimaanlagenvorrichtung (10) ausgetauscht wird.

2. Klimaanlagen-Steuersystem nach Anspruch 1,
wobei, wenn ein Kühlen durchgeführt werden muss, und wenn bestimmt wird, dass die Außenlufttemperatur, die durch den Außenluft-Temperatursensor detektiert wurde, niedriger ist als die vorbestimmte Trockenkugeltemperatur-Obergrenze, und eine AußenluftKühlbedingung erfüllt ist, die Steuerung (30) den Lüfter (20) in einem Nicht-Wärmetauschermodus betreibt, in dem keine Wärme in dem Lüfter (20) ausgetauscht wird, und die Klimaanlagenvorrichtung (10) in einem Luftaussendemodus betreibt, in dem keine Wärme in der Klimaanlagenvorrichtung (10) ausgetauscht wird, wobei die Außenluftkühlbedingung angibt, dass die Außenlufttemperatur, die durch den Außenluft-Temperatursensor detektiert wird, niedriger ist als die vorbestimmte Trockenkugeltemperatur-Obergrenze und höher ist als eine vorbestimmte Trockenkugeltemperatur-Untergrenze, und dass die Außenluftfeuchtigkeit, die durch den Außenluftfeuchtigkeitssensor detektiert wurde, niedriger ist als eine vorbestimmte Obergrenze der absoluten Luftfeuchte und höher ist als eine vorbestimmte Untergrenze der absoluten Luftfeuchte.

3. Klimaanlagen-Steuersystem nach Anspruch 2,
wobei, wenn ein Kühlen durchgeführt werden muss, und wenn bestimmt wird, dass die Außenlufttemperatur, die durch den Außenluft-Temperatursensor detektiert wurde, niedriger ist als die vorbestimmte Trockenkugeltemperatur-Obergrenze und dass die Außenluftkühlbedingung nicht erfüllt ist, die Steuerung (30) den Lüfter (20) in einem Nicht-Wärmetauschermodus betreibt, in dem keine Wärme in dem Lüfter (20) ausgetauscht wird, und die Klimaanlagenvorrichtung (10) in dem Wärmetauschermodus betreibt, in dem Wärme in der Klimaanlagenvorrichtung (10) ausgetauscht wird.

## Revendications

1. Système de commande de climatisation qui comprend :
un appareil de climatisation (10) configuré pour alimenter une pièce intérieure en air soufflé (SA) et un ventilateur (20) configuré pour remplacer l'air de retour (RA) qui provient de la pièce intérieure par de l'air extérieur (OA), l'appareil de climatisation (10) étant relié en série au ventilateur (20) de sorte que l'air extérieur (OA) qui provient du ventilateur (20) et l'air de retour (RA) qui provient de la pièce intérieure soient fournis à l'appareil de climatisation (10),
le ventilateur comprenant :
une soufflerie de ventilation (21) destinée à aspirer l'air extérieur (OA) vers le ventilateur (20) et à fournir l'air extérieur aspiré (OA) à l'appareil de climatisation (10) ;
un ventilateur de décharge (22) destiné à aspirer l'air de retour (RA) vers le ventilateur (20) et à décharger l'air de retour aspiré (RA) sous forme d'air d'évacuation (EA) vers l'extérieur ;
et un échangeur thermique total de ventilation (23) configuré pour échanger de la chaleur entre l'air extérieur (OA) et l'air de retour (RA) aspiré dans le ventilateur (20),
l'appareil de climatisation comprenant :
un ventilateur de climatisation (11) destiné à aspirer l'air extérieur (OA) et l'air de retour (RA) vers l'appareil de ventilation (10) et à fournir l'air d'admission en guise d'air soufflé (SA),
le système de commande de climatisation comprenant :
un registre (40) de dérivation d'air de retour (RA) configuré pour ajuster un rapport entre l'air de retour fourni à l'appareil de climatisation (10) et l'air de retour fourni au ventilateur (20) ;
un capteur de substance à odeur nauséabonde spécifiée (50) configuré pour détecter une concentration d'une substance à odeur nauséabonde spécifiée dans l'air extérieur (OA) ;
un contrôleur (30) configuré pour faire fonctionner la soufflerie de ventilation (21) et le ventilateur de décharge (22) du ventilateur (20) et pour contrôler le registre de dérivation d'air de retour (40) de sorte qu'une relation air de retour = air soufflé - air extérieur soit satisfaite lorsque le contrôleur (30) détermine que la concentration en substance à odeur nauséabonde spécifiée détectée par le capteur de substance à odeur nauséabonde spécifiée (50) est inférieure ou égale à un seuil prédéterminé, et pour suspendre le fonctionnement de la soufflerie de ventilation (21) et du ventilateur de décharge (22) du ventilateur (20) et pour contrôler le registre de dérivation d'air de retour (40) de sorte que la totalité de l'air de retour soit fournie à l'appareil de climatisation (10) lorsque le contrôleur (30) détermine que la concentration en substance à odeur nauséabonde spécifiée détectée par le capteur de substance à odeur nauséabonde spécifiée (50) est supérieure au seuil prédéterminé,
un capteur de température interne (25) configuré pour détecter une température de la pièce intérieure ;
un capteur de température d'air extérieur configuré pour détecter une température de l'air extérieur ; et
un capteur d'humidité de l'air extérieur configuré pour détecter une humidité de l'air extérieur ;
dans lequel le contrôleur (30) procède à un refroidissement lorsqu'il détermine que la température de la pièce intérieure détectée par le capteur de température intérieure (25) est supérieure à une température sèche limite supérieure prédéterminée,
dans lequel, lorsqu'un refroidissement doit être effectué et lorsqu'il est déterminé que la température de l'air extérieur détectée par le capteur de température d'air extérieur est supérieure ou égale à la température sèche limite supérieure prédéterminée, le contrôleur (30) déclenche le ventilateur (20) dans un mode d'échange thermique dans lequel de la chaleur est échangée au sein de l'échangeur thermique total de ventilation (23) du ventilateur (20), et déclenche l'appareil de climatisation (10) dans un mode d'échange thermique dans lequel de la chaleur est échangée dans l'appareil de climatisation (10).

2. Système de commande de climatisation selon la revendication 1,
dans lequel, lorsqu'un refroidissement doit être effectué, et lorsqu'il est déterminé que la température de l'air extérieur détectée par le capteur de température d'air extérieur est inférieure à la température sèche limite supérieure prédéterminée et qu'une condition de refroidissement par air extérieur est satisfaite, le contrôleur (30) déclenche le ventilateur (20) dans un mode de non-échange thermique dans lequel aucune chaleur n'est échangée dans le ventilateur (20), et déclenche l'appareil de climatisation (10) dans un mode d'envoi d'air dans lequel aucune chaleur n'est échangée dans l'appareil de climatisation (10), la condition de refroidissement par air extérieur spécifiant que la température de l'air extérieur détectée par le capteur de température d'air extérieur est inférieure à la température sèche limite supérieure prédéterminée et supérieure à une température sèche limite inférieure prédéterminée, et que l'humidité de l'air extérieur détectée par le capteur d'humidité d'air extérieur est inférieure à une humidité absolue limite supérieure prédéterminée et supérieure à une humidité absolue limite inférieure prédéterminée.

3. Système de commande de climatisation selon la revendication 2,
dans lequel, lorsqu'un refroidissement doit être effectué, et lorsqu'i est déterminé que la température de l'air extérieur détectée par le capteur de température d'air extérieur est inférieure à la température sèche limite supérieure prédéterminée et que la condition de refroidissement par air extérieur n'est pas satisfaite, le contrôleur (30) déclenche le ventilateur (20) dans le mode de non-échange thermique dans lequel aucune chaleur n'est échangée dans le ventilateur (20), et déclenche l'appareil de climatisation (10) dans le mode d'échange thermique dans lequel de la chaleur est échangée dans l'appareil de climatisation (10).
